# EUROPÄISCHE PATENTSCHRIFT

(11) **EP 0 837 805 B1**
(45) Veröffentlichungstag und Bekanntmachung des Hinweises auf die Patenterteilung: **01.03.2000**
(21) Anmeldenummer: 97922895.4
(22) Anmeldetag: 07.05.1997
(51) Int. Cl.: B60T 8/48, B60T 8/24

(54) **HYDRAULISCHE FAHRZEUGBREMSANLAGE**
HYDRAULIC VEHICLE BRAKE SYSTEM
SYSTEME DE FREINAGE HYDRAULIQUE POUR VEHICULE

(30) Priorität: 08.05.1996 DE 19618402
(43) Veröffentlichungstag der Anmeldung: 29.04.1998
(73) Patentinhaber: ROBERT BOSCH GMBH, 70442 Stuttgart (DE)
(72) Erfinder: PÜSCHEL, Helmut, D-71672 Marbach (DE); SCHMIDT, Günther, D-97941 Tauberbischofsheim (DE)
(86) Internationale Anmeldenummer: DE9700921
(87) Internationale Veröffentlichungsnummer: WO9742067

(56) Entgegenhaltungen:
- EP-A- 0 482 367
- WO-A-92/17357
- WO-A-96/20102
- WO-A-97/02166
- WO-A-97/19842
- WO-A-97/28031
- DE-A- 3 337 545
- DE-A- 4 128 091
- DE-A- 4 213 710

## Beschreibung

### Stand der Technik

Die Erfindung betrifft eine hydraulische Fahrzeugbremsanlage mit einer Antriebsschlupf- und/oder Fahrdynamikregeleinrichtung nach der Gattung des Hauptanspruchs.

Bekannte derartige Fahrzeugbremsanlagen weisen eine Bremsdruckmodulationsventilanordnung mit einem Einlaß- und einem Auslaßventil für jeden Radbremszylinder sowie eine Rückförderpumpe auf. Die Rückförderpumpe fördert beim Absenken des Bremsdrucks in einem Radbremszylinder aus diesem ausgelassene Bremsflüssigkeit zurück in den Hauptbremszylinder oder zum Anheben des Bremsdrucks in den Radbremszylinder.

Probleme treten auf, wenn bei nicht betätigtem Hauptbremszylinder Bremsdruck aufgebaut werden soll, wie beispielsweise während der Antriebsschlupf- und der Fahrdynamikregelung. Die drucklose Bremsflüssigkeit strömt der Rückförderpumpe nur langsam zu, weswegen sich der Druckaufbau verzögert. Dies kann bei der Antriebsschlupfregelung noch akzeptabel sein, für die Fahrdynamikregelung ist ein sehr schneller Druckaufbau notwendig, um einem Schleudern eines Fahrzeugs bereits im Ansatz entgegenzuwirken.

Die DE-OS 33 37 545 offenbart eine Vorladepumpe, die zwischen einem Bremsflüssigkeits-Vorratsbehälter und dem Hauptbremszylinder angeordnet ist und in einen der beiden Druckräume des Tandem-Hauptbremszylinders fördert. Dadurch läßt sich bei nichtbetätigtem Hauptbremszylinder sehr schnell Bremsdruck im entsprechenden Bremskreis aufbauen, so daß der Rückförderpumpe Bremsflüssigkeit unter Druck und damit in ausreichendem Volumenstrom zufließt.

Die bekannte Fahrzeugbremsanlage hat allerdings den Nachteil, daß für die herkömmliche Bremsbetätigung ohne Blockierschutz-, Antriebsschlupf- oder Fahrdynamikregelung die Vorladepumpe in beiden Richtungen durchströmbar sein muß, um den notwendigen Bremsflüssigkeitsstrom vom Vorratsbehälter in den Hauptbremszylinder und entgegengesetzt zu gewährleisten. Es sind also nur spezielle Pumpentypen als Vorladepumpe verwendbar, nämlich hydrodynamische Pumpen wie beispielsweise Kreisel- oder Fliehkörperpumpen, die im Stillstand von Bremsflüssigkeit in beiden Richtungen durchströmbar sind.

Eine Kreiselpumpe müßte mehrstufig ausgeführt werden, um den Anforderungen an eine Vorladepumpe zu genügen. Sie wird dadurch teuer. Hinzu kommt, daß aufgrund der hohen Pumpendrehzahl mit Kavitation und Gasblasenbildung zu rechnen ist, was zur Beschädigung der Kreiselpumpe und zur Beeinträchtigung der Funktion der Bremsanlage führen würde.

Andere Pumpentypen als Vorladepumpe haben den Nachteil, daß sie den den Bremsflüssigkeitsstrom drosseln, d. h. den Bremsflüssigkeitsstrom vom Vorratsbehälter in den Hauptbremszylinder und zurück behindern. Kreisel- und Fliehkörperpumpen sind also als Vorladepumpen wenig geeignet.

Durch das Dokument WO 92/17357 A (Figur 3) ist eine die Gattung bildende hydraulische Fahrzeugbremsanlage bekannt mit einer Antriebsschlupfregeleinrichtung, mit einem Hauptbremszylinder, mit einem dem Hauptbremszylinder zugeordenten und oberhalb diesem angeordneten Vorratsbehälter für Bremsflüssigkeit, mit einem Radbremszylinder, dem eine Bremsdruckmodulationsventilanordnung zugeordnet ist, mit einer Rückförderpumpe zum Rückfördern von aus dem Radbremszylinder ausgelassener Bremsflüssigkeit in Richtung des Hauptbremszylinders und mit einer von einem Antriebsmotor fortlaufend antreibbaren Pumpe, deren Druckseite mit einem Druckraum des Hauptbremszylinders kommuniziert, wobei die Druckseite dieser Pumpe durch ein hydraulisches Element hindurch mit dem Vorratsbehälter kommuniziert und wobei Ventilmittel vorgesehen sind, um bei angetriebener Pumpe und dabei einem von der Druckseite dieser Pumpe ausgehenden Bremsflüssigkeitsstroms die Druckkammer des Hauptbremszylinders unter Druck zu setzen. Hierbei ist das hydraulische Element als ein Überdruckventil bezeichnet und begrenzt den druckseitig der Pumpe zur Verfügung stehenden Druck. Ein Eingang der Rückförderpumpe ist lediglich an dasjenige Ventil einer Bremsdruckmodulationsventilanordnung angeschlossen, mittels dem zwecks Bremsdruckabsenkung Bremsflüssigkeit aus der Radbremse ausgelassen wird für eine Bremsdruckabsenkung. Demzufolge setzt die Rückförderpumpe nur solche Bremsflüssigkeit unter Druck, die sich zuvor in der Radbremse befand. Wenn bei losgelassenem Bremspedal eine Antriebsschlupfbegrenzung notwendig wird per Bremsung mittels wenigstens einer Radbremse, so muß alle in dieser Radbremse benötigte Bremsflüssigkeit für den notwendigen Bremsdruckanstieg von der sich aus dem Vorratsbehälter versorgenden Pumpe gefördert und unter diesen hohen Druck gesetzt werden. Für ein Fahrzeug mit einem Antriebsmotor vorn und Antriebsrädern hinten kann wegen der relativ schwach bemessenen Hinterradbremsen für Antriebsschlupfbegrenzungen ein Bremsdruck benötigt werden, der beispielsweise den Radblockierbremsdruck übersteigt. Folglich ist diese Pumpe eine Hochdruckpumpe wie die Rückförderpumpe, die gegen Blockierbremsdruck in der Druckkammer des Hauptbremszylinders zurückfördert. Dementsprechend leistungsstark, schwer und teuer ist also der Antriebsmotor der sich aus dem Vorratsbehälter versorgenden Hochdruckpumpe auszubilden. Der technische Aufwand liegt also in der Größenordnung des Aufwandes für die Rückförderpumpe und deren Antriebsmotor. Eine hydraulische Verbindungsleitung zwischen der Druckseite der Hochdruckpumpe und dem Hauptbremszylinder ist für diesen hohen Druck auszulegen. Als nachteilig im Betrieb dieser Hochdruckpumpe kann angesehen werden, daß wegen des hohen Druckes und der dadurch bei ungleichförmiger Förderweise auftretenden Druckfluktuationen der Hauptbremszylinder erschüttert wird und deshalb über eine mit ihm verbundene Befestigungswand, die normalerweise die Fußraumwand eines Fahrgastraumes ist, Geräusch in den Fahrgastraum abstrahlt.

### Vorteile der Erfindung

Vorteile der Erfindung sind, daß die Vorladepumpe nicht im Stillstand in beiden Richtungen durchströmbar sein muß, weswegen eine Vielzahl verschiedener Pumpentypen zur Auswahl steht, daß keine qualitativ hochwertige Pumpe für hohen Druck und mit gutem Wirkungsgrad notwendig ist, da mit der Vorladepumpe nur ein Vordruck erzeugt wird, der von der Rückförderpumpe auf den notwendigen Bremsdruck erhöht wird, wodurch kostengünstige, bereits vorhandene und erprobte Pumpen verwendet werden können, und daß sich die Bauhöhe des Hauptbremszylinders mit dem Vorratsbehälter nicht vergrößert, da die Vorladepumpe oder Ventile und Leitungen nicht zwischen diesen beiden Bauteilen angeordnet werden müssen, sondern an einer Stelle angebracht werden kann, wo Bauraum vorhanden ist. Desweiteren kann auf hydraulische Elemente zurückgegriffen werden, die sich in derartigen Fahrzeugbremsanlagen bereits bewährt haben.

Die Unteransprüche haben vorteilhafte Weiterbildungen und Verbesserungen der im Hauptanspruch angegebenen Erfindung zum Gegenstand.

Bei einer einfachen Ausgestaltung der Erfindung gemäß Anspruch 2 fördert die Vorladepumpe unmittelbar in den Hauptbremszylinder und durch eine Drossel als hydraulisches Element in den Vorratsbehälter. Es erfolgt also eine Teilung des Bremsflüssigkeitsstroms in den Vorratsbehälter und in den Hauptbremszylinder. Eine spezielle Drossel ist nicht unbedingt notwendig, es kann auch der Durchflußwiderstand einer Bremsflüssigkeitsleitung ausreichen, oder eine Bohrung in der Druckleitung von der Vorladepumpe zum Behälteranschluß.

Vorzugsweise ist das hydraulische Element ein Ventil, das in einer Grundstellung einen ungehinderten Durchfluß vom Vorratsbehälter in den Hauptbremszylinder und in entgegengesetzter Richtung freigibt und in einer Schaltstellung die Druckseite der Vorladepumpe mit dem Hauptbremszylinder verbindet (Anspruch 3).

Das Ventil kann ein Magnetventil sein, das beispielsweise von einem für die Antriebsschlupf- oder Fahrdynamikregelung notwendigen Steuergerät angesteuert wird (Anspruch 4) oder ein hydraulisch betätigtes Ventil, das vom Förderdruck der Vorladepumpe gesteuert wird (Anspruch 5).

Durch Anordnung der Vorladepumpe gemäß Anspruch 8 unterhalb eines Bremsflüssigkeitsspiegels im Vorratsbehälter, und zwar auch bei weitgehend entleertem Bremsflüssigkeitsbehälter, wird sichergestellt, daß die Vorladepumpe beim Einschalten mit Bremsflüssigkeit gefüllt ist und somit verzögerungsfrei Bremsdruck in der Fahrzeugbremsanlage aufbauen kann.

Zum schnellen Rückstellen eines hydraulisch betätigten Vorladeventils wird gemäß Anspruch 10 die Vorladepumpe abgeschaltet und mit der Rückförderpumpe Bremsflüssigkeit durch das in seiner Schaltstellung befindliche Vorladeventil, das in dieser Stellung die Druckseite der Vorladepumpe mit dem Hauptbremszylinder verbindet, angesaugt. Auf diese Weise fällt der Bremsflüssigkeitsdruck auf der Druckseite der Vorladepumpe, der das hydraulisch betätigte Vorladeventil in seiner Schaltstellung hält, rasch ab und das Vorladeventil gelangt in seine Grundstellung, in der es den Hauptbremszylinder mit dem Vorratsbehälter verbindet, so daß die Bremsflüssigkeit ungehindert aus der Fahrzeugbremsanlage durch den Hauptbremszylinder in den Vorratsbehälter zurückströmen kann.

### Zeichnung

Die Erfindung wird nachfolgend anhand in der Zeichnung dargestellter Ausführungsbeispiele näher erläutert. Es zeigen:
- Figur 1: ein hydraulisches Schaltbild einer erfindungsgemäßen Fahrzeugbremsanlage,
- Figuren 2a, c und d: Einzelheiten von Ausführungsformen der Fahrzeugbremsanlage aus Figur 1,
- Figur 2b: ein Einzeltei aus Figuren 2a, c und d,
- Figuren 3a und b: konstruktive Anbringungs- und Anschlußmöglichkeiten einer Vorladepumpe der erfindungsgemäßen Fahrzeugbremsanlage,
- Figuren 4a bis c: hydrauliche Bauelemente der erfindungsgemäßen Fahrzeugbremsanlage und
- Figur 5: eine Anbringungsmöglichkeit einer Vorladepumpe gemäß der Erfindung.

### Beschreibung der Ausführungsbeispiele

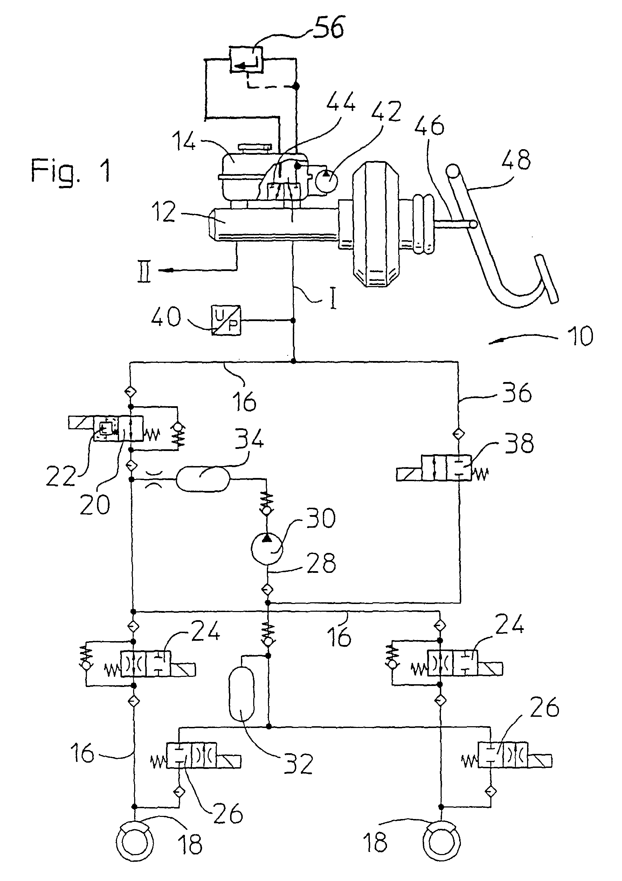

In Figur 1 ist ein Bremskreis I einer erfindungsgemäßen Zweikreis-Fahrzeugbremsanlage 10 dargestellt. Der nicht dargestellte Bremskreis II ist übereinstimmend mit dem dargestellten Bremskreis I aufgebaut und funktioniert in gleicher Weise.

Die Fahrzeugbremsanlage 10 weist einen Tandem-Hauptbremszylinder 12 mit einem Vorratsbehälter 14 auf. Eine sich verzweigende Hauptbremsleitung 16 führt zu an diesen Bremskreis I angeschlossene Radbremszylinder 18. In die Hauptbremsleitung 16 ist ein in seiner Grundstellung geöffnetes Umschaltventil 20 mit integriertem Druckbegrenzungsventil 22 eingeschaltet. Jedem Radbremszylinder 18 ist ein in seiner Grundstellung geöffnetes Einlaßventil 24 vorgeschaltet.

Des weiteren weist jeder Radbremszylinder 18 ein in seiner Grundstellung geschlossenes Auslaßventil 26 auf, von denen eine gemeinsame Rückleitung 28 zur Hauptbremsleitung 16 führt und zwischen dem Umschaltventil 20 und den Einlaßventilen 24 mündet. In die Rückleitung 28 ist eine Rückförderpumpe 30 eingeschaltet, der ein Speicher 32 vor- und ein Dämpfer 34 nachgeschaltet sind.

Das Einlaß- und Auslaßventil 24, 26 bilden eine Bremsdruckmodulationsventilanordnung des jeweiligen Radbremszylinders 18, mit denen in an sich bekannter Weise der Bremsdruck im Radbremszylinder 18 modulierbar ist, um Schlupf des entsprechenden Fahrzeugrades beim Bremsen (Blockierschutzregelung), beim Anfahren (Antriebsschlupfregelung) zu verhindern bzw. zu begrenzen oder um durch gezieltes Bremsen eines Fahrzeugrades dessen Seitenführungskraft zu verringern um ein Schleudern des Fahrzeugs zu verhindern (Fahrdynamikregelung).

Die Bremsdurckmodulation erfolgt mit Hilfe der Rückförderpumpe 30. Das Umschaltventil 20 kann während der Bremsdruckmodulation geschlossen werden, um Rückwirkungen auf den Hauptbremszylinder 12 zu unterbinden. Einlaß- und Auslaßventil 24, 26 können beispielsweise auch zu einem 3/3-Ventil anstelle der dargestellten, separaten 2/2-Ventile zusammengefaßt werden.

Eine Ansaugleitung 36 führt vom Hauptbremszylinder 12 zu einer Saugseite der Rückförderpumpe 30. In der Ansaugleitung 36 ist ein in seiner Grundstellung geschlossenes Ansaugventil 38 angeordnet. Durch die Ansaugleitung 36 erhält die Rückförderpumpe 30 bei geöffnetem Ansaugventil 38 Bremsflüssigkeit unmittelbar aus dem Hauptbremszylinder 12, was Voraussetzung für einen schnellen Druckaufbau ist.

Des weiteren ist an den Hauptbremszylinder 12 ein Drucksensor 40 angeschlossen. Sämtliche Ventile 20, 24, 26, 38 sind Magnetventile.

Um der Rückförderpumpe 30 bei nicht betätigtem Hauptbremszylinder 12 Bremsflüssigkeit in kurzer Zeit in ausreichender Menge zuzuführen, weist die erfindungsgemäße Fahrzeugbremsanlage 10 eine Vorladepumpe 42 auf, die unmittelbar am Vorratsbehälter 14 angeordnet sein kann und deren Saugseite Bremsflüssigkeit aus dem Vorratsbehälter 14 erhält. Die Vorladepumpe 42 fördert Bremsflüssigkeit durch ein 3/2-Vorladeventil 44 in den Hauptbremszylinder 12. Das Vorladeventil 44 ist im Vorratsbehälter 14 unmittelbar am Anschluß des Hauptbremszylinders 12 angeordnet. In seiner Grundstellung öffnet das Vorladeventil 44 einen Durchlaß vom Vorratsbehälter 14 in den Hauptbremszylinder 12, so daß Bremsen wie üblich erfolgt.

Bei Betrieb der Vorladepumpe 42 wird das Vorladeventil 44 umgeschaltet, es verschließt den Durchlaß vom Vorratsbehäter 14 in den Hauptbremszylinder 12 und verbindet eine Druckseite der Vorladepumpe 42 mit dem Hauptbremszylinder 12. Auf diese Weise läßt sich mit der Vorladepumpe 42 Druck im Hauptbremszylinder 12 aufbauen, wenn dieser nicht betätigt ist. Durch die Ansaugleitung 36 und das geöffnete Ansaugventil 38 ist dadurch der Rückförderpumpe 30 im Bedarfsfall Bremsflüssigkeit in ausreichender Menge für einen schnellen Druckaufbau in den Radbremszylindern 18 zuführbar, auch wenn der Hauptbremszylinder 12 nicht betätigt ist.

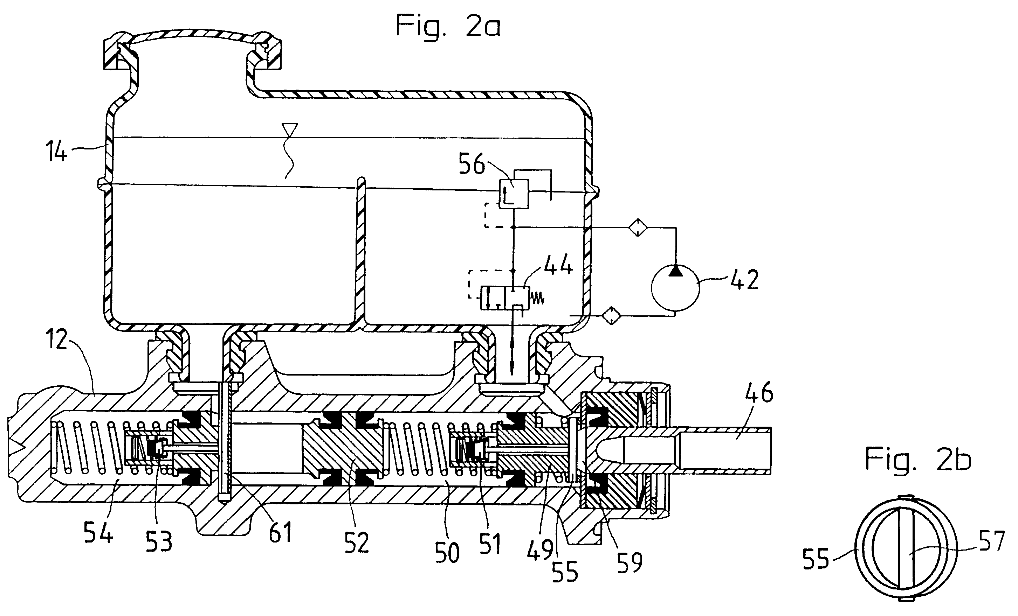

Die Vorladepumpe 42 fördert vorzugsweise in einen Primär- oder "Stangenkreis"-Druckraum 50 des Hauptbremszylinders 12 (vgl. Figur 2a), in dem unmittelbar von einem Bremspedal 48 über eine Pedalstange 46 und einen Stangenkolben 49 Bremsdruck aufgebaut wird. Dagegen wird Bremsdruck im Sekundär- oder "Schwimmkreis"-Druckraum 54 mittelbar über den Druck im Stangenkreis aufgebaut. Der Anschluß der Vorladepumpe 42 an den Stangenkreis hat den Vorteil, daß über die Druckerzeugung im Stangenkreis auch im Schwimmkreis Druck erzeugt wird, d. h. es wird in beiden Bremskreisen I, II mit einer Vorladepumpe 42 Druck erzeugt. Trotzdem bleiben beide Bremskreise I, II voneinander getrennt, damit ein Ausfall eines Bremskreises die Funktion des anderen Bremskreises nicht beeinträchtigt.

Figur 2a zeigt den hydraulischen Anschluß der Vorladepumpe 42. Sie saugt aus dem Vorratsbehälter 14 an, ihre Druckseite ist durch das 3/2-Vorladeventil 44 an den Stangenkreis 50 des Hauptbremszylinders 12 angeschlossen. Das Vorladeventil 44 verbindet in seiner Grundstellung den Vorratsbehälter 14 mit der Druckkammer 50 des Stangenkreises, so daß ein Bremsflüssigkeitsaustausch zwischen Vorratsbehälter 14 und Hauptbremszylinder 12 wie üblich stattfinden kann. In der Schaltstellung verbindet das Vorladeventil 44 die Druckseite der Vorladepumpe 42 mit der Druckkammer 50 des Hauptbremszylinders 12 und trennt den Vorratsbehälter 14 vom Hauptbremszylinder 12, so daß Bremsflüssigkeit aus dem Vorratsbehälter 14 von der Vorladepumpe 42 unter Druck in den Hauptbremszylinder 12 gefördert wird und von dort in den in Figur 1 dargestellten Bremskreis I gelangt.

Die Druckerzeugung in der Druckkammer 50 des Stangenkreises verschiebt einen Schwimmkolben 52 des Hauptbremszylinders 12, wodurch auch in einer Druckkammer 54 des Schwimmkreises Bremsflüssigkeitsdruck aufgebaut wird, so daß auch im zweiten, nicht dargestellten Bremskreis II Druck erzeugt wird.

Das Vorladeventil 44 ist hydraulisch betätigt, seine Betätigung erfolgt durch Druckbeaufschlagung von der Druckseite der Vorladepumpe 42. Dadurch verbindet das Vorladeventil 44 die Vorladepumpe 42 mit dem Hauptbremszylinder 12, wenn die Vorladepumpe 42 in Gang gesetzt wird und Druck erzeugt.

Zusätzlich zum Vorladeventil 44 ist an die Druckseite der Vorladepumpe 42 ein Druckbegrenzungsventil 56 angeschlossen, dessen Auslaß in den Vorratsbehälter 14 erfolgt.

Zur Klarstellung der Zeichnung wird bemerkt, daß Bremsfluid nur durch das Vorladeventil 44 und nicht an diesem vorbei in die Druckkammer 50 des Stangenkreises des Hauptbremszylinders 12 gelangen kann.

Beide Kolben 49, 52 des Hauptbremszylinders 12 weisen ein Zentralventil 51, 53 auf, das bei nicht betätigtem Hauptbremszylinder geöffnet ist, so daß Bremsflüssigkeit aus dem Vorratsbehälter 14 in die beiden Druckkammern 50, 54 des Hauptbremszylinders 12 und in umgekehrter Richtung strömen kann.

Das Zentralventil 51 des Stangenkolbens 49 wird bei nicht betätigtem Hauptbremszylinder 12 von einem Steuering 55 mit Querstift 57 (Figur 2b) in der geöffneten Stellung gehalten. Der Querstift 57 des Steuerrings 55 durchgreift eine Queröffnung 59 im Stangenkolben 49, der Steuerring 55 hat dadurch definiertes Axialspiel auf dem Stangenkolben 49. Er bewegt sich mit dem Stangenkolben 49 mit. Bei nicht betätigtem Hauptbremszylinder 12 liegt der Steuerring 55 am Hauptbremszylinder 12 an und öffnet dadurch über seinen Querstift 57 das Zentralventil 51 des Stangenkolbens 49.

Das Zentralventil 53 des Schwimmkolbens 52 wird bei nicht betätigtem Hauptbremszylinder 12 von einer geschlitzten Spreizhülse 61 in seiner geöffneten Stellung gehalten, die quer in den Hauptbremszylinder 12 eingesetzt ist, die zugleich einen Anschlag für den Schwimmkolben 52 bildet und durch die Bremsflüssigkeit aus dem Vorratsbehälter 14 in den Hauptbremszylinder 12 und zurück gelangt.

Die beiden Zentralventile 51, 53 wirken bei betägtigtem Hauptbremszylinder 12 als Rückschlagventile, die in Richtung der jeweiligen Druckkammer 50, 54 des Hauptbremszylinders 12 öffnen.

Um das hydraulisch betätigte Vorladeventil 44 bei nicht betätigtem Hauptbremszylinder 12 schnell in seine Grundstellung zurückzustellen, nachdem es durch Betrieb der Vorladepumpe 42 in seine Schaltstellung gestellt worden ist, wird die Vorladepumpe 42 abgestellt und mit der Rückförderpumpe 30 kurzzeitig Bremsflüssigkeit durch das Vorladeventil 44 angesaugt. Dadurch sinkt der Druck auf der Druckseite der Vorladepumpe 42, der das Vorladeventil 44 in seiner Schaltstellung hält, rasch ab und das Vorladeventil 44 gelangt zurück in seine Grundstellung, in der es den Hauptbremszylinder 12 mit dem Vorratsbehälter 14 verbindet.

Anschließend kann Bremsflüssigkeit wie an sich bekannt mit der Rückförderpumpe 30 von den Radbremszylindern 18 durch den Hauptbremszylinder 12 hindurch in den Vorratsbehälter 14 gefördert werden. Zum Rückstellen des hydraulisch betätigten Vorladeventils 44 werden das Umschaltventil 20 geschlossen, und das Ansaugventil 38, sowie das Einlaß- und das Auslaßventil 24, 26 geöffnet.

Das Rückfördern von Bremsflüssigkeit aus einem der Radbremzylinder 18 ist mit der Rückförderpumpe 30 durch das Druckbegrenzungsventil 56 auch bei in der Schaltstellung befindlichem Vorladeventil 44 möglich, wenn der Hauptbremszylinder 12 nicht betätigt ist.

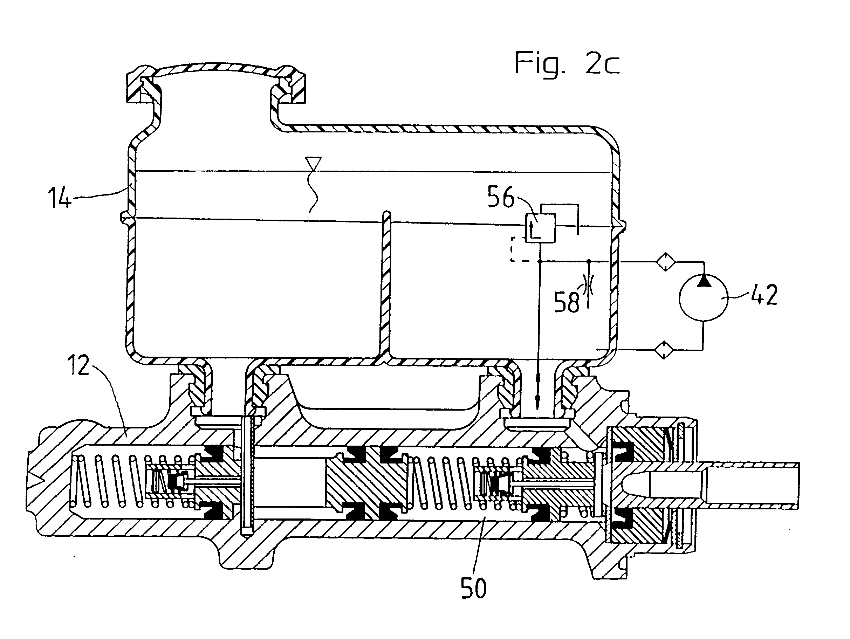

Figur 2c zeigt eine Abwandlung der Figur 2a gezeigten Ausführungsform der Erfindung. Bei ihr fehlt das Vorladeventil 44, stattdessen ist die Druckseite der Vorladepumpe 42 unmittelbar mit der Druckkammer 50 des Hauptbremszylinders 12 und parallel dazu durch eine Drossel 58 mit dem Vorratsbehälter 14 verbunden. Solange die Vorladepumpe 42 außer Betrieb ist, ist der Vorratsbehälter 14 durch die Drossel 58 hindurch mit dem Hauptbremszylinder 12 verbunden, die Fahrzeugbremsanlage 10 funktioniert also wie gewohnt. Sobald die Vorladepumpe 42 fördert wird der Bremsflüssigkeitsstrom geteilt zwischen der Druckkammer 50 des Hauptbremszylinders 12 und, durch die Drossel 58 hindurch, dem Vorratsbehälter 14. Die Drossel 58 bewirkt also einen Druckaufbau im Hauptbremszylinder 12 und damit in der angeschlossenen Fahrzeugbremsanlage 10.

Zur Begrenzung des Vorladedrucks ist das aus Figur 2a bekannte Druckbegrenzungsventil 56 vorhanden. Diese Ausführungsform der Erfindung ist einfacher und damit preiswerter in ihrem Aufbau als die in Figur 2a dargestellte Ausführungsform. Die Drossel 58 kann durch eine Leitung, deren Länge und Querschnitt eine Drosselung bewirken, verwirklicht sein. Ein spezielles Drosselelement ist nicht unbedingt erforderlich.

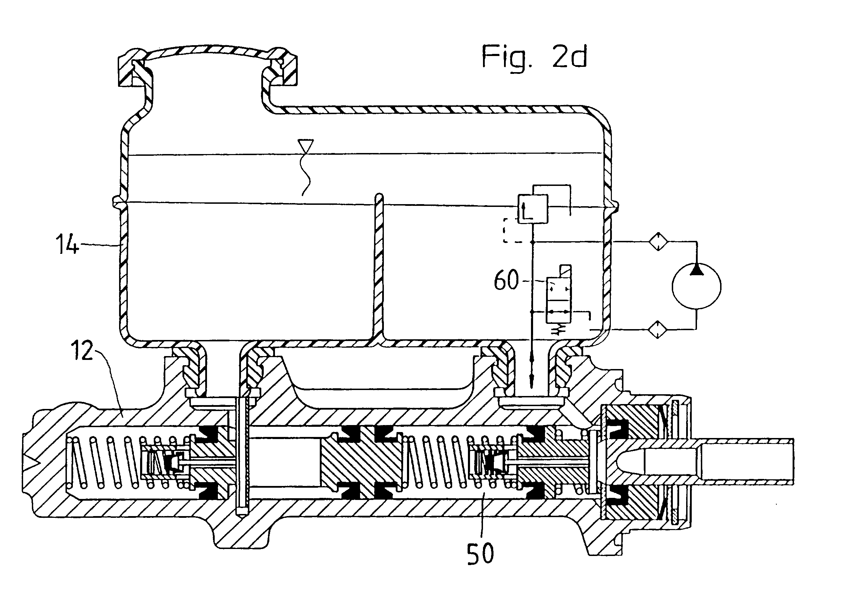

Figur 2d zeigt eine weitere Ausführungsform der Erfindung. Bei ihr ist gegenüber der in Figur 2a dargestellten Ausführungsform der Erfindung das Vorladeventil als Magnetventil 60 ausgebildet. Ansonsten stimmen diese beiden Ausführungsformen miteinander überein, es wird auf die Erläuterungen zu Figur 2a verwiesen. Die Verwendung eines Magnetventils als Vorladeventil 60 hat den Vorteil, daß sich dieses sehr schnell in seine Grundstellung bringen läßt, in der der Durchlaß von der Druckkammer 50 des Stangenkreises des Hauptbremszylinders 12 in den Vorratsbehälter 14 offen ist, um einen Bremsdruck in der erfindungsgemäßen Fahrzeugbremsanlage 10 schnell abbauen zu können.

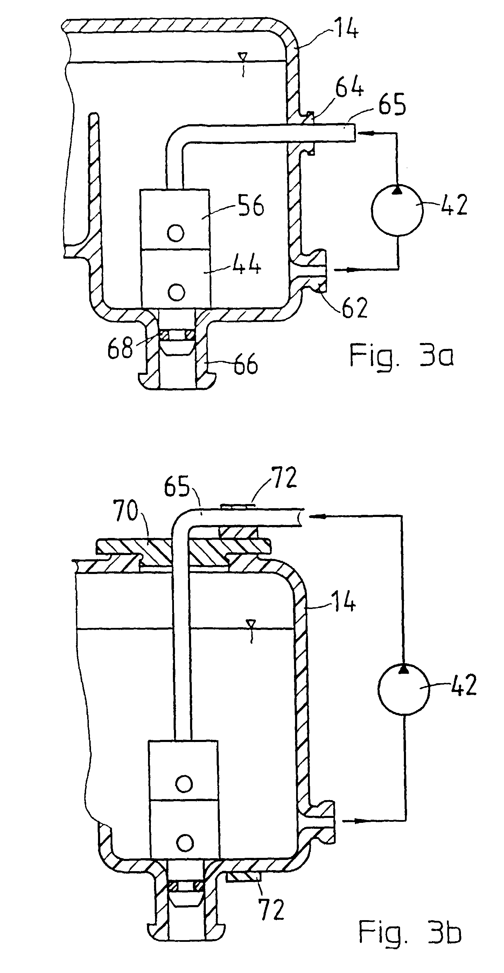

In Figur 3a ist der Einbau des Vorladeventils 44 und des Druckbegrenzungsventils 56 in den Vorratsbehälter 14 dargestellt. Der Bremsflüssigkeitsbehälter 14 weist einen seitlichen Anschlußstutzen 62 für die Saugseite der symbolisch dargestellten Vorladepumpe 42 an einer tiefen Stelle des Vorratsbehälters 14 auf. Durch einen weiteren Stutzen 64 in einer Seitenwand des Vorratsbehälters 14 führt eine Leitung 65 von der Druckseite der Vorladepumpe 42 zu einer das Vorladeventil 44 und das Druckbegrenzungsventil 56 beinhaltenden Baueinheit. Diese ist in einen Anschlußstutzen 66 des Vorratsbehälters 14 eingesetzt und mit einem O-Ring 68 abgedichtet. Mit dem Anschlußstutzen 66 wird der Vorratsbehälter 14 am Hauptbremszylinder 12 in an sich bekannter Weise angeflanscht (Figur 2a).

In Figur 3b ist die Leitung 65 von der Druckseite der Vorladepumpe 42 durch einen Nachfülldeckel 70 des Vorratsbehälters 14 geführt und mit einem Gummi-Spannband 72 befestigt. Im übrigen ist diese Ausführungsform der Erfindung wie diejenige in 3a aufgebaut. Auf die entsprechenden Erläuterungen wird verwiesen.

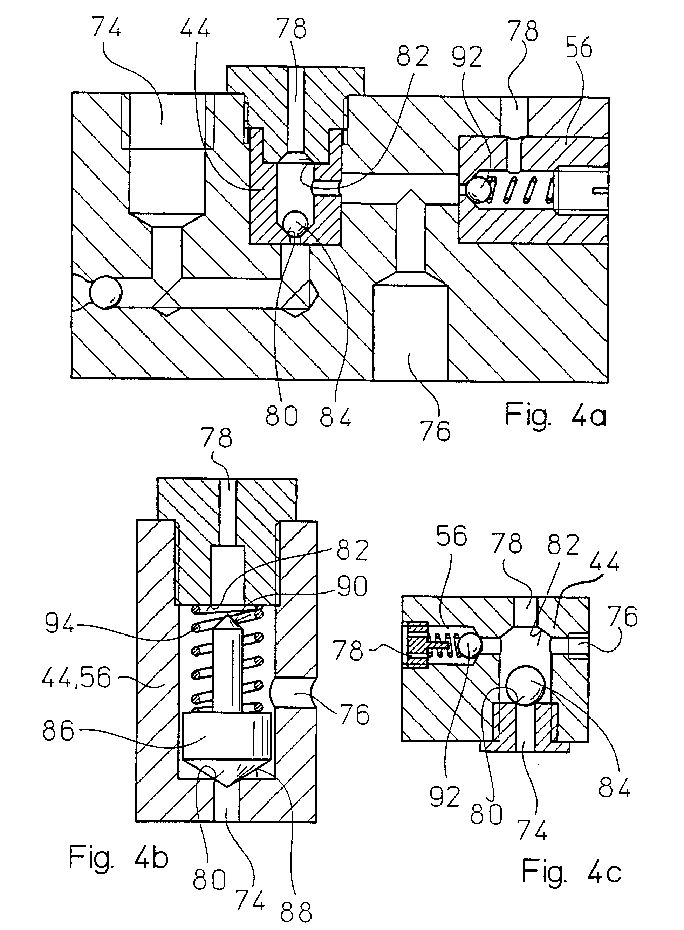

Figuren 4a bis c zeigen Vorlade- und Druckbegrenzungsventil 44, 56 umfassende Baueinheiten im Schnitt zum Einbau in den Vorratsbehälter 14. Diese weisen einen Anschluß 74 für die Druckseite der Vorladepumpe 42, einen Anschluß 76 für die Druckkammer 50 des Stangenkreises des Hauptbremszylinders 12 und eine bzw. zwei Öffnungen 78 zum Einlaß und Auslaß von Bremsflüssigkeit im Vorratsbehälter 14 auf. Das Vorladeventil 44 weist zwei einander gegenüberliegende Ventilsitze 80, 82 und eine Kugel 84 als Ventilschließkörper oder einen Ventilschließkörper 86 mit zwei Ventilkonen 88, 90 auf. Die Ventilkörper 84, 86 geben einen Durchfluß von der behälterseitigen Öffnung 78 zum hauptbremszylinderseitigen Anschluß 76 frei. Fördert die Vorladepumpe 42 Bremsflüssigkeit in den Anschluß 74, bewegt diese den Ventilkörper 84, 86 gegen den gegenüberliegenden Venilsitz 82 und verschließt damit den Durchgang vom Vorratsbehälter in den Hauptbremszylinder und öffnet den Durchgang von der Druckseite der Vorladepumpe in den Hauptbremszylinder. Die in Figuren 4a bis c dargestellten Vorladeventile 44 sind also hydraulisch betätigte Ventile, die vom Förderdruck der Vorladepumpe 42 gesteuert werden.

Als Druckbegrenzungsventil 56 weisen die Baueinheiten gemäß Figuren 4a und c ein an sich bekanntes Überdruckventil mit einer federbelasteten Ventilkugel 92 auf. Beim Ausführungsbeispiel gemäß Figur 4b ist der Ventilkörper 86 federbelastet, er wird von einer Schraubendruckfeder 94 gegen den mit der Druckseite der Vorladepumpe 42 verbundenen Ventilsitz 80 gedrückt. Das Vorladeventil 44 gemäß Figur 4b bildet damit zugleich das Druckbegrenzungsventil 56 für die Vorladepumpe 42.

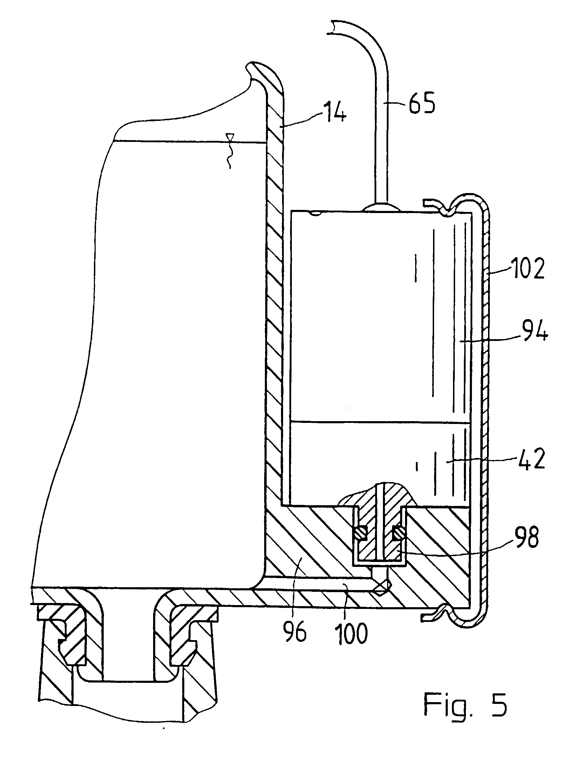

Bei der Ausführungsform gemäß Figur 5 ist die Vorladepumpe 42 zusammen mit einem Elektro-Antriebsmotor 94, an den sie angeflanscht ist, unmittelbar am Vorratsbehälter 14 angebracht. Der Vorratsbehälter 14 weist dazu einen seitlich an seiner Unterseite abstehenden Ansatz 96 auf, in den die Vorladepumpe 42 mit einem zapfenartigen Sauganschluß 98 angeflanscht ist. Vom Vorratsbehälter 14 führt ein abgewinkelter Kanal 100 zum Sauganschluß 98 der Vorladepumpe 42.

Gehalten wird die Baueinheit aus Vorladepumpe 42 und Antriebsmotor 94 mittels eines Federclips 102 in Form einer Metallklammer, der eine Unterseite des Ansatzes 96 des Vorratsbehälters 14 und eine obere Stirnseite des Pumpenantriebsmotors 94 übergreift. Eine Druckleitung 65 ist am Umfang der Vorladepumpe 42 angeschlossen und wie in Figur 3b dargestellt in den Vorratsbehälter 14 geführt. In Figur 5 verläuft die Druckleitung 65 hinter der Vorladepumpe 42 und dem Pumpenmotor 94.

Diese Art der Anbringung der Vorladepumpe 42 mit ihrem Pumpenmotor 94 unmittelbar am Bremsflüssigkeits-Vorratsbehälter 14 hat den Vorteil eines kompakten Aufbaus und eines kurzen Sauganschlusses der Vorratspumpe 42 an den Vorratsbehälter 14, der dadurch wenig Strömungswiderstand hat. Weiterer Vorteil ist, daß die Vorladepumpe 42 unter einem Bremsflüssigkeitsspiegel im Vorratsbehälter 14 angebracht ist und dadurch stets mit Bremsflüssigkeit gefüllt ist, so daß sie beim Einschalten sofort Druck aufbaut. Die Anbringung der Vorladepumpe 42 am Vorratsbehälter 14 ist so

niedrig, daß sie auch bei minimalem Bremsflüssigkeitsstand sich unterhalb des Bremsflüssigkeitsspiegels befindet.

Zum Test der Vorlade-Komponenten der erfindungsgemäßen Fahrzeugbremsanlage wird nachfolgend beschriebener Testzyklus durchgeführt: Nach Einschalten der Zündung des Fahrzeugs oder auch während Stillstand oder Fahrt des Fahrzeugs werden bei nicht betätigtem Hauptbremszylinder 12 die Einlaßventile 24 der Radbremszylinder 18 geschlossen und die Vorladepumpe 42 eingeschaltet. Mit dem Drucksensor 40 wird der Druckanstieg im Hauptbremszylinder 12 überwacht. Wird nicht innerhalb einer vorgegebenen Zeit ein vorgegebener Druck erreicht, liegt eine Störung vor. Wird der vorgegebene Druck innerhalb der vorgegebenen Zeit erreicht, wird die Vorladepumpe 42 wieder abgeschaltet und der Bremsflüssigkeitsdruckabfall im Hauptbremszylinder 12 mit dem Drucksensor 40 überwacht. Fällt der Druck im Hauptbremszylinder 12 nicht innerhalb einer vorgegebenen Zeit auf Null (evtl. zuzüglich einer Toleranz), liegt ebenfalls ein Fehler vor.

## Patentansprüche

1. Hydraulische Fahrzeugbremsanlage (10) mit einer Antriebs- und/oder Fahrdynamikregeleinrichtung, mit einem Hauptbremszylinder (12), mit einem dem Hauptbremszylinder (12) zugeordneten und oberhalb diesem angeordneten Vorratsbehälter (14) für Bremsflüssigkeit, mit einem Radbremszylinder (18), dem eine Bremsdruckmodulationsventilanordnung (24, 26) zugeordnet ist, mit einer Rückförderpumpe (30) zum Rückfördern von aus den Radbremszylinder (18) ausgelassener Bremsflüssigkeit in Richtung des Hauptbremszylinders (12) und mit einer von einem Antriebsmotor (94) antreibbaren Pumpe (42), deren Druckausgang mit einem Druckraum (50) des Hauptbremszylinders (12) kommuniziert, wobei die Druckseite der Pumpe (42) durch ein hydraulisches Druckbegrenzungselement (56) hindurch mit dem Vorratsbehälter (14) kommuniziert und wobei Mittel (44, 58, 60) vorgesehen sind, um bei laufender Pumpe (42) und dabei eines von der Druckseite der Pumpe (42) ausgehenden Bremsflüssigkeitsstroms die Druckkammer (50) des Hauptbremszylinders (12) unter Druck zu setzen, dadurch gekennzeichnet, daß der Vorratsbehälter (14) einen hauptbremszylinderseitigen und in diesen eintauchenden Anschlußstutzen (66) aufweist, daß die Druckseite der Pumpe (42) durch diesen Anschlußstutzen (66) mit der Druckkammer (50) des Hauptbremszylinders (12) kommuniziert, daß die Pumpe (12) als eine Niederdruck lieferende Vorladepumpe ausgebildet ist, die einerseits den Radbremszylinder (18) durch die Bremsdruckmodulationsventilanordnung (24) vorfüllt zwecks Bremsbelaganlegens und andererseits durch eine Ansaugleitung (36) und ein in diese eingebautes Ansaugventil (38), das für den Antriebsschlupfregelbetrieb und/oder den Fahrdynamikregelbetrieb öffenbar ist, die Rückförderpumpe (30) lädt, wobei das hydraulische Element (56) eingerichtet ist, den Niederdruck zu begrenzen.

2. Hydraulische Fahrzeugbremsanlage nach Anspruch 1, **dadurch gekennzeichnet**, daß die Mittel eine Drossel (58) enthalten.

3. Hydraulische Fahrzeugbremsanlage nach Anspruch 1, **dadurch gekennzeichnet**, daß die Mittel ein Vorladeventil (44) enthalten, durch das hindurch der Druckraum (50) des Hauptbremszylinders (12) entweder mit dem Vorratsbehälter (14) oder mit der Druckseite der Vorladepumpe (42) Kommuniziert.

4. Hydraulische Fahrzeugbremsanlage nach Anspruch 1, **dadurch gekennzeichnet**, daß die Mittel ein Magnetventil (60) enthalten, das der Druckraum (50) des Hauptbremszylinders (12) und die Druckseite der Vorladepumpe (42) mit dem Vorratsbehälter (14) Verbinden kann.

5. Hydraulische Fahrzeugbremsanlage nach Anspruch 3, **dadurch gekennzeichnet**, daß das Vorladeventil ein hydraulisch vom Förderdruck der Vorladepumpe (42) betätigtes Ventil (44) ist.

6. Hydraulische Fahrzeugbremsanlage nach Anspruch 1, **dadurch gekennzeichnet**, daß das hydraulische Druckbegrenzungselement (56) ein Druckbegrenzungsventil (56) ist.

7. Hydraulische Fahrzeugbremsanlage nach Anspruch 1, **dadurch gekennzeichnet,** daß der Hauptbremszylinder (12) als ein Tandem-Hauptbremszylinder ausgebildet ist, daß zwei voneinander unabhängige Bremskreise an den Tandem-Hauptbremszylinder (12) angeschlossen sind, und daß die Vorladepumpe (42) mit dem Primär- oder Stangenkreis-Druckraum (50) des Hauptbremszylinders (12) kommuniziert.

8. Hydraulische Fahrzeugbremsanlage nach Anspruch 1, **dadurch gekennzeichnet**, daß die Vorladepumpe (42) unterhalb eines Bremsflüssigkeitsspiegels im Vorratsbehälter (14) angeordnet ist.

9. Hydraulische Fahrzeugbremsanlage nach Anspruch 1 oder 8, **dadurch gekennzeichnet**, daß die Vorladepumpe (42) am Vorratsbehälter (14) angebracht ist.

10. Verfahren zum Betrieb der hydraulischen Fahrzeugbremsanlage nach Anspruch 5, **dadurch gekennzeichnet**, daß zur Beendigung einer Blockierschutz-, einer Antriebsschlupf- oder einer Fahrdynamikregelung die Vorladepumpe (42) abgeschaltet und mit der Rückförderpumpe (30) kurzzeitig Bremsflüssigkeit durch das Vorladeventil (44) angesaugt wird.

11. Verfahren zum Test der hydraulischen Fahrzeugbremsanlage nach einem der Ansprüche 1 bis 9, **gekennzeichnet durch** die Verfahrensschritte, daß bei nichtbetätigtem Hauptbremszylinder (12)
- alle zur Bremsdruckmodulationsventilanordnung gehörenden Einlaßventile (24) der Radbremszylinder (18) geschlossen werden
- die Vorladepumpe (42) eingeschaltet wird und
- der Bremsflüssigkeitsdruckanstieg überwacht und bewertet wird.

12. Verfahren zum Testen nach Anspruch 11, **dadurch gekennzeichnet**, daß
- die Vorladepumpe (42) wieder ausgeschaltet und
- der Bremsflüssigkeitsdruckabfall überwacht und bewertet wird.

## Claims

1. Hydraulic vehicle brake system (10) with a traction and/or driving dynamics control device, with a brake master cylinder (12), with a reservoir (14) for brake fluid, assigned to the brake master cylinder (12) and arranged above the latter, with a wheel brake cylinder (18) which is assigned a brake-pressure modulation valve arrangement (24, 26), with a return pump (30) for returning brake fluid discharged from the wheel brake cylinder (18) in the direction of the brake master cylinder (12), and with a pump (42) which is capable of being driven by a drive motor (94) and a delivery outlet of which communicates with a pressure space (50) of the brake master cylinder (12), the delivery side of the pump (42) communicating with the reservoir (14) through a hydraulic pressure-limiting element (56), and means (44, 58, 60) being provided in order, when the pump (42) and, at the same time, a brake fluid stream emanating from the delivery side of the pump (42) are running, to put the pressure chamber (50) of the brake master cylinder (12) under pressure, characterized in that the reservoir (14) has a connection piece (66) located on the same side as the brake master cylinder and penetrating into the latter, in that the delivery side of the pump (42) communicates, by means of this connection piece (66), with the pressure chamber (50) of the brake master cylinder (12), and in that the pump (42) is designed as a precharging pump which delivers low pressure and which, on the one hand, prefills the wheel brake cylinder (18) by means of the brake-pressure modulation valve arrangement (24), for the purpose of applying the brake linings, and, on the other hand, charges the return pump (30) by means of a suction line (36) and a suction valve (38) installed in the latter and capable of being opened for the traction control mode and/or driving dynamics control mode, the hydraulic element (56) being designed to limit the low pressure.

2. Hydraulic vehicle brake system according to Claim 1, characterized in that the means contain a throttle (58) .

3. Hydraulic vehicle brake system according to Claim 1, characterized in that the means contain a precharging valve (44), through which the pressure space (50) of the brake master cylinder (12) communicates either with the reservoir (14) or with the delivery side of the precharging pump (42).

4. Hydraulic vehicle brake system according to Claim 1, characterized in that the means contain a solenoid valve (60) which can connect the pressure space (50) of the brake master cylinder (12) and the delivery side of the precharging pump (42) to the reservoir (14).

5. Hydraulic vehicle brake system according to Claim 3, characterized in that the precharging valve is a valve (44) actuated hydraulically by the feed pressure of the precharging pump (42).

6. Hydraulic vehicle brake system according to Claim 1, characterized in that the hydraulic pressure-limiting element (56) is a pressure-limiting valve (56).

7. Hydraulic vehicle brake system according to Claim 1, characterized in that the brake master cylinder (12) is designed as a tandem brake master cylinder, in that two brake circuits independent of one another are connected to the tandem brake master cylinder (12), and in that the precharging pump (42) communicates with the primary or piston-rod circuit pressure space (50) of the brake master cylinder (12).

8. Hydraulic vehicle brake system according to Claim 1, characterized in that the precharging pump (42) is arranged below a brake fluid level in the reservoir (14).

9. Hydraulic vehicle brake system according to Claim 1 or 8, characterized in that- the precharging pump (42) is mounted on the reservoir (14).

10. Method for operating the hydraulic vehicle brake system according to Claim 5, characterized in that, in order to terminate anti-lock, traction or driving dynamics control, the precharging pump (42) is switched off and brake fluid is briefly sucked in through the precharging valve (44) by means of the return pump (30).

11. Method for testing the hydraulic vehicle brake system according to one of Claims 1 to 9, characterized by the method steps that, with the brake master cylinder (12) not actuated,
- all the inlet valves (24), belonging to the brake-pressure modulation valve arrangement, of the wheel brake cylinders (18) are closed,
- the precharging pump (42) is switched on, and
- the brake fluid pressure rise is monitored and evaluated.

12. Method for testing according to Claim 11, characterized in that
- the precharging pump (42) is switched off again, and
- the brake fluid pressure fall is monitored and evaluated.

## Revendications

1. Système hydraulique de freinage (10) pour un véhicule comprenant un système de régulation de l'entraînement et/ou du mouvement dynamique du véhicule, un maître cylindre de freinage (12), un réservoir (14) associé au maître cylindre de freinage (12) et disposé au dessus de celui-ci pour le liquide de freinage, un cylindre de frein de roue (18), auquel est associé un dispositif (24, 26) de distributeurs de modulation de la pression de freinage, une pompe de refoulement (30) servant à refouler du liquide de freinage sortant du cylindre de frein de roue (18) en direction du maître cylindre de freinage (12) et une pompe (42), qui peut être entraînée par un moteur d'entraînement (94), dont la sortie sous pression communique avec une chambre de pression (50) du maître cylindre de freinage (12), le côté sous pression de la pompe (42) communiquant en passant à travers un élément de limitation de la pression (56) avec le réservoir (14) et des moyens (44, 58, 60) étant prévus, pour mettre sous pression la chambre de pression (50) du maître cylindre de freinage (12) quand la pompe (42) tourne et quand on a un écoulement du liquide de freinage sortant du côté sous pression de la pompe (42),
caractérisé en ce que
• le réservoir (14) présente un ajutage de raccordement (66) qui est situé du côté du maître cylindre de freinage et qui plonge dans celui-ci,
• le côté sous pression de la pompe (42) communique à travers cet ajutage de raccordement (66) avec la chambre de pression (50) du maître cylindre de freinage (12),
• la pompe (12) est constituée sous la forme d'un pompe de surpression délivrant une basse pression, pompe qui pré-remplit d'une part le cylindre de frein de roue (18) au moyen du dispositif (24) de distributeur de modulation de la pression de freinage afin d'appliquer les garnitures de frein et d'autre part charge la pompe de refoulement (30), à travers une conduite d'aspiration (36) et une vanne d'aspiration (38) insérée dans celle-ci, vanne d'aspiration (38) qui peut s'ouvrir pour faire fonctionner la régulation anti-patinage et/ou celle du mouvement dynamique du véhicule, l'élément hydraulique (56) étant disposé pour limiter la basse pression.

2. Système hydraulique de freinage selon la revendication 1,
caractérisé en ce que
les moyens comprennent un étranglement (58).

3. Système hydraulique de freinage selon la revendication 1,
caractérisé en ce que
les moyens comprennent un distributeur de suralimentation (44) à travers lequel la chambre de pression (50) du maître cylindre de freinage (12) communique soit avec le réservoir (14), soit avec le côté sous pression de la pompe de surpression (42).

4. Système hydraulique de freinage selon la revendication 1,
caractérisé en ce que
les moyens comprennent une électrovanne (60) qui peut relier la chambre de pression (50) du maître cylindre de freinage (12) et le côté sous pression de la pompe de surpression (42) au réservoir (14).

5. Système hydraulique de freinage selon la revendication 3,
caractérisé en ce que
le distributeur de suralimentation est une vanne (44) actionnée hydrauliquement par la pression de refoulement de la pompe de surpression (42).

6. Système hydraulique de freinage selon la revendication 1,
caractérisé en ce que
l'élément hydraulique (56) de limitation de la pression est une soupape de limitation de la pression (56).

7. Système hydraulique de freinage selon la revendication 1,
caractérisé en ce que
• le maître cylindre de freinage (12) est constitué sous la forme d'un maître cylindre de freinage en tandem,
• deux circuits de freinage, indépendants l'un de l'autre, sont raccordés au maître cylindre de freinage en tandem (12), et
• la pompe de surpression (42) communique avec la chambre de pression du circuit primaire ou du circuit à tiges (50) du maître cylindre de freinage (12).

8. Système hydraulique de freinage selon la revendication 1,
caractérisé en ce que
la pompe de surpression (42) est disposée en dessous du niveau du liquide de freinage dans le réservoir (14).

9. Système hydraulique de freinage selon la revendication 1 ou 8,
caractérisé en ce que
la pompe de surpression (42) est mise sur le réservoir (14).

10. Procédé servant à faire fonctionner l'installation hydraulique de freinage d'un véhicule, selon la revendication 5,
caractérisé en ce qu'
• on débranche la pompe de surpression (42) pour achever une régulation d'antiblocage, d'antipatinage ou du mouvement dynamique du véhicule, et
• on aspire brièvement du liquide de freinage avec la pompe de refoulement (30) à travers le distributeur de suralimentation (44).

11. Procédé servant à tester l'installation hydraulique de freinage du véhicule selon l'une des revendications 1 à 9,
caractérisé par
• les séquences suivantes, alors que le maître cylindre de freinage (12) n'est pas actionné :
• tous les distributeurs d'entrée (24) des cylindres de freinage des roues (18), qui font partie du dispositif des distributeurs de modulation de la pression de freinage, sont fermés,
• la pompe de surpression (42) est branchée, et
• on contrôle et on exploite la montée de la pression du liquide de freinage.

12. Procédé servant à tester selon la revendication 11,
caractérisé en ce que
• la pompe de surpression (42) est à nouveau débranchée, et
• on contrôle et on exploite la chute de la pression du liquide de freinage.
